# FASCICULE DE BREVET EUROPEEN

(11) **EP 3 717 576 B1**
(45) Date de publication et mention de la délivrance du brevet: **21.08.2024**
(21) Numéro de dépôt: 18808357.0
(22) Date de dépôt: 28.11.2018
(51) Int. Cl.: C09D 5/10

(54) **COMPOSITIONS DE REVETEMENT DESHYDRATEES, SOUS FORME SOLIDE, LEUR PROCEDE D'OBTENTION ET LEUR PROCEDE DE REHYDRATATION**
DEHYDRIERTE BESCHICHTUNGSZUSAMMENSETZUNGEN IN FESTER FORM, HERSTELLUNGSVERFAHREN DAFÜR UND VERFAHREN ZUR REHYDRIERUNG DAVON
DEHYDRATED COATING COMPOSITIONS IN SOLID FORM, PRODUCTION METHOD THEREOF, AND METHOD FOR REHYDRATING SAME

(30) Priorité: 28.11.2017 FR 1761264
(43) Date de publication de la demande: 07.10.2020
(73) Titulaire: NOF Metal Coatings Europe, 60100 Creil (FR)
(72) Inventeur: POULET, Jean-Marie, 83700 Saint-Raphael (FR); LABOUCHE, Didier, 59230 Saint Amand les Eaux (FR); BRUYERE, Stéphanie, 60340 Villers sous Saint-Leu (FR)
(74) Mandataire: AtlantIP International
(86) Numéro de dépôt international: PCT/EP2018/082889
(87) Numéro de publication internationale: WO 2019/106041

(56) Documents cités:
- WO-A1-2005/078026
- CN-A- 102 911 543

## Description

La présente invention concerne des compositions de revêtement déshydratées, sous forme solide, leur procédé d'obtention et leur réhydratation pour la préparation d'une composition aqueuse de revêtement, notamment visant à protéger des pièces métalliques de la corrosion.

On connait des compositions de revêtement anti-corrosion de pièces métalliques à base de métal particulaire en dispersion aqueuse comprenant un liant à base de titanate et/ou zirconate et à base de silane, de l'eau (WO2005/078026). WO2005/078026 ne décrit pas des compositions solides réhydratables à l'eau.

L'invention propose maintenant des compositions de revêtement déshydratées qui permettent notamment de réduire le volume de stockage et d'améliorer la durée de vie des compositions de revêtement.

L'invention a pour premier objet une composition solide, réhydratable à l'eau destinée à la préparation d'une composition de revêtement anti-corrosion de pièces métalliques à base de métal particulaire en dispersion aqueuse, ladite composition solide étant à base d'un métal particulaire ou d'un mélange de métaux particulaires, d'un précurseur de titanate et/ou d'un précurseur de zirconate et d'un silane portant au moins une fonction hydrolysable en fonction hydroxyle avec un ratio molaire Ti/Si allant de 10/90 à 60/40, ladite composition étant sous forme pulvérulente, la taille des particules variant d'environ 2µm à 3 mm.

Le titanate, le zirconate, le silane, et éventuellement un silicate, vont former ensemble un liant.

De manière surprenante, il a été constaté que l'une des conditions essentielles à la réhydratation de la composition solide est qu'elle soit à base d'un précurseur de titanate Ti et/ou d'un précurseur de zirconate Zr. Avantageusement, la composition solide est à base d'un précurseur de titanate Ti.

Par « précurseur », on entend, au sens de la présente invention, un réactif chimique qui permet d'amorcer une réaction. Il s'agit souvent d'un alcoolate (alcoxyde de formule M(OR)n : où M est un métal, par exemple Ti, Zr ou Si, et R un groupe organique alkyle CnHn-1) ou bien un sel métallique.

Par « précurseur de titanate », on entend, au sens de la présente invention, un composé comprenant au moins un atome de titane et apte à former des liaisons covalentes, entre elles ou avec les autres précurseurs, incluant les précurseurs de silicium que sont le silane et le silicate, pour former un liant.

Par « précurseur de zirconate », on entend, au sens de la présente invention, un composé comprenant au moins un atome de zirconium et apte à former des liaisons covalentes, entre elles ou avec les autres précurseurs, incluant les précurseurs de silicium que sont le silane et le silicate, pour former un liant.

Par « silane », on entend, au sens de la présente invention, un composé organique comprenant au moins un atome de Si avec au moins une liaison Si-C. Dans un silane, les liaisons avec l'atome de silicium, outre la liaison Si-C, sont généralement des liaisons Si-O, Si-Si ou Si-H, plus avantageusement Si-O.

Par « silicate », on entend, au sens de la présente invention, un composé organique ou inorganique, avantageusement organique, comprenant au moins un atome de Si sans liaison Si-C. Dans un silicate, les liaisons avec l'atome de silicium sont généralement des liaisons Si-O, Si-Si ou Si-H, plus avantageusement Si-O.

Par « taille de particule », on entend, au sens de la présente invention, la dimension maximale de la particule considérée.

Par « composition à base de » on entend, au sens de la présente invention, une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Par « composition solide » on entend, au sens de la présente invention, une composition sous la forme d'un gel dur ou sous une forme pulvérulente. La composition solide est avantageusement obtenue par déshydratation d'une composition aqueuse. La composition solide est réhydratable à l'eau et est destinée à la préparation d'une composition de revêtement anti-corrosion de pièces métalliques à base de métal particulaire en dispersion aqueuse.

Par « composition aqueuse » on entend, au sens de la présente invention, une composition aqueuse à base d'un métal particulaire ou d'un mélange de métaux particulaires, d'un précurseur de titanate et/ou d'un précurseur de zirconate et d'un silane portant au moins une fonction hydrolysable en fonction hydroxyle selon l'invention, qui est destinée à être déshydratée pour donner la composition solide selon l'invention.

Par « composition de revêtement » on entend, au sens de la présente invention, une composition à base de métal particulaire en dispersion aqueuse, destinée à être appliquée sur un substrat, en particulier métallique, puis soumise à une opération de cuisson afin de donner le revêtement. La composition de revêtement consiste en la composition solide réhydratée et éventuellement d'autres composés ajoutés à cette composition. Dans la présente demande, le terme « composition aqueuse de revêtement » pourra également être employé.

Au sens de la présente invention, le «revêtement» est donc obtenu par application de la composition de revêtement sur un substrat, en particulier métallique, la couche de revêtement étant ensuite soumise à une opération de cuisson. Les termes « revêtement », « revêtement anti-corrosion » et « film sec de revêtement » sont utilisés dans la présente demande de manière synonyme.

Par « taux d'extrait sec », on entend au sens de la présente invention, le taux du résidu obtenu par évaporation des solvants et des matières volatiles contenues dans la composition aqueuse initiale ou la composition de revêtement initiale ; l'évaporation étant avantageusement effectuée dans une étuve pendant 1h à 180 °C. Le taux d'extrait sec est exprimé en pourcentage en poids par rapport au poids total de la composition aqueuse initiale ou de la composition de revêtement initiale.

Le ratio molaire (Ti+Zr)/Si varie avantageusement de 10/90 à 60/40, plus avantageusement de 20/80 à 50/50, encore plus avantageusement de 25/75 à 50/50.

La source de silicium est le silane, mais peut également être en partie un silicate. Lorsqu'un silicate est également présent, le silane est néanmoins majoritaire en mole.

La source de Ti est avantageusement un titanate organique. La source de Zr est avantageusement un zirconate organique.

Lorsque la composition ne comprend pas de zirconate, le ratio molaire Ti/Si varie avantageusement de 10/90 à 60/40, plus avantageusement de 20/80 à 50/50, encore plus avantageusement de 25/75 à 50/50.

Le précurseur de titanate est avantageusement un titanate organique.

Dans un premier mode de réalisation, préféré, le titanate organique est choisi parmi les tétraalkyle en C₁-C₁₀ titanates, avantageusement les tétraalkyle en C₁-C₈ titanates. Ils peuvent être représentés par la formule (I) suivante : 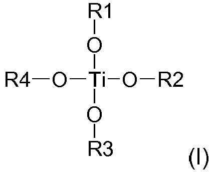 dans laquelle R1, R2, R3 et R4 représentent indépendamment un radical alkyle en C₁-C₁₀, avantageusement en C₁-C₈, éventuellement substitué. Le tétraalkyle en C₁-C₁₀ titanate avantageusement le tétraalkyle en C₁-C₈ titanate est avantageusement choisi dans le groupe constitué par le tétraéthyltitanate (TET, Ti(OC₂H₅)₄), le tétra-n-butyltitanate (TₙBT, Ti(OC₄H₉)₄, le tetra-isopropoxytitanate (Ti(OCH(CH₃)₂)₄), le tétra-n-propoxytitanate (Ti(OCH₂CH₂CH₃)₄) et l'octylèneglycoltitanate (OGT, TI(O₂C₈H₁₇)₄).
Dans un deuxième mode de réalisation, le titanate organique est choisi parmi les titanates organiques sous forme chélatée non compatibles avec l'eau (compatibles en phase organique), on peut notamment citer l'acétylacétonate titanium et le diisopropoxy-biséthylacétoacétato titanate, commercialisés par Dorf Ketal sous les noms TYZOR^{®} AA (acétylacétonate titanium), et TYZOR^{®} DC (diisopropoxy-biséthylacétoacétato titanate).

Dans un troisième mode de réalisation, le titanate organique est choisi parmi les titanates chélatés compatibles en phase aqueuse, qui peuvent avantageusement être représentés par la formule générale (II) suivante : 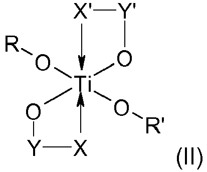 dans laquelle R et R' représentent indépendamment l'un de l'autre un radical alkyle en C₁-C₁₀, avantageusement en C₁-C₈, éventuellement substitué, X et X' représentent indépendamment un groupe fonctionnel comprenant un atome d'oxygène ou d'azote, et Y et Y' représentent indépendamment une chaîne hydrocarbonée ayant 1 à 4 atomes de carbone. X et X' représentent avantageusement un radical amino ou lactate.

Le titanate organique sous forme chélatée compatible en phase aqueuse est avantageusement choisi dans le groupe constitué par les triéthanolamines titanates (TYZOR^{©} TE et TEP commercialisés par Dorf Ketal). Comme exemple de titanates organiques sous forme chélatée compatibles en phase aqueuse, on peut également citer l'alcanolamine titanate sous forme chélatée et le chélate de titanate et d'acide lactique, commercialisés par Dorf Ketal sous les noms TYZOR^{®} TA (alcanolamine titanate sous forme chélatée) et TYZOR^{®} LA (chélate de titanate et d'acide lactique).

Le précurseur de zirconate est avantageusement un zirconate organique.

Dans un premier mode de réalisation, préféré, le zirconate organique est choisi parmi les tétraalkyle en C₁-C₁₀ zirconates, avantageusement les tétraalkyle en C₁-C₈ zirconates, qui peuvent avantageusement être représentés par la formule (III) suivante : 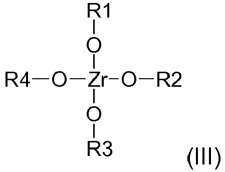 dans laquelle R1, R2, R3 et R4 représentent indépendamment un radical alkyle en C₁-C₁₀, avantageusement en C₁-C₈, éventuellement substitué. Le tétraalkyle en C₁-C₁₀ zirconate, avantageusement le tétraalkyle en C₁-C₈ zirconate, est avantageusement choisi dans le groupe constitué par le tétra-n-propyl zirconate et le tétra-n-butyl zirconate.

Dans un deuxième mode de réalisation, le zirconate organique est choisi parmi les zirconates organiques sous forme chélatée non compatibles avec l'eau (compatibles en phase organique), on peut notamment citer le diéthylcitrate zirconate chélaté commercialisé par Dorf Ketal sous le nom TYZOR^{®} ZEC.

Dans un troisième mode de réalisation, le zirconate organique est choisi parmi les zirconates chélatés compatibles en phase aqueuse, qui peuvent avantageusement être représentés par la formule générale (IV) suivante : 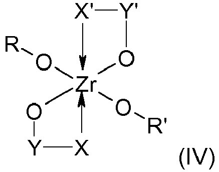 dans laquelle R et R' représentent indépendamment l'un de l'autre un radical alkyle en C₁-C₁₀, avantageusement en C₁-C₈, éventuellement substitué, X et X' représentent indépendamment un groupe fonctionnel comprenant un atome d'oxygène ou d'azote, et Y et Y' représentent indépendamment une chaîne hydrocarbonée ayant 1 à 4 atomes de carbone. X et X' représentent avantageusement un radical amino.

Le zirconate organique chelaté peut avantageusement être le triéthanolamine zirconate (TYZOR^{®} TEAZ commercialisé par Dorf Ketal). Comme exemple de zirconate organique sous forme chélatée compatible en phase aqueuse, on peut également citer le chélate de zirconate et d'acide lactique commercialisé par Dorf Ketal sous le nom TYZOR^{®} LAZ .

Le précurseur de titanate est avantageusement un titanate organique, plus avantageusement choisi parmi les tétraalkyle en C₁-C₈ titanates, et le précurseur de zirconate est avantageusement un zirconate organique, plus avantageusement choisi parmi les tétraalkyle en C₁-C₈ zirconates.

Le silane porte au moins une fonction hydrolysable en fonction hydroxyle, avantageusement choisie parmi un radical alcoxy en C₁-C₄, de préférence en C₁-C₂.

On entend par « fonction hydrolysable en fonction hydroxyle », toute fonction chimique susceptible de réagir avec l'eau pour se transformer en fonction hydroxyle-OH.

Le silane porte avantageusement trois fonctions hydrolysables en fonction hydroxyle, de préférence identiques.

Le silane porte au moins un, avantageusement un, radical hydrocarboné, relié à l'atome de silicium par un de ses atomes de carbone. Ce radical hydrocarboné peut également comprendre des hétéroatomes ou des halogènes, avantageusement des hétéroatomes. Ce radical hydrocarboné peut être linéaire, ramifié voire comprendre un cycle. Ce radical hydrocarboné peut avantageusement comprendre jusqu'à 10 atomes de carbone, plus avantageusement de 4 à 10 atomes de carbone.

Dans une variante préférée, le silane porte en outre une fonction époxy (oxirane), qui favorise la réticulation et l'adhésion au substrat. Ainsi, le radical hydrocarboné comprend avantageusement une fonction époxy.

Le silane est avantageusement aisément dispersé dans le milieu aqueux et est, de préférence, soluble dans un tel milieu.
Le silane utilisé est avantageusement un silane à fonction époxy choisi parmi le di- ou triméthoxysilane à fonction époxy et le di- ou triéthoxysilane à fonction époxy, ainsi que leurs mélanges, en particulier comme le bêta-(3,4-époxycyclohexyl)éthyl-triméthoxysilane, le 4-(triméthoxysilyl)butane-1,2-époxyde ou le gamma-glycidoxypropyltriméthoxysilane ou le gamma glycidoxypropyltriéthoxysilane. Le silane utilisé peut également être avantageusement l'octyltriethoxysilane, le phenyltriethoxysilane, le methyltriethoxysilane, (2-diethylphosphatoethyl) triethoxy silane, le vinyltriethoxysilane, le 3-Aminopropyltriethoxysilane, le methylmethacrylate trimethoxysilane, ou le méthylmethacrylate triethoxysilane.

La composition solide peut en outre comprendre un silicate. Ce silicate est également source de Si. Le silicate est avantageusement un alcoxyde de silicium, en particulier l'orthosilicate de tétraéthyle (Si(OC₂H₅)₄ et dit « TEOS »).

Le métal particulaire de la composition de revêtement peut être choisi dans le groupe constitué par les pigments métalliques tels que l'aluminium, le manganèse, le nickel, le titane, l'acier inoxydable, le zinc, leurs alliages, ainsi que leurs mélanges. Le métal particulaire est avantageusement choisi parmi le zinc et l'aluminium, ainsi que leurs alliages et leurs mélanges ou leurs alliages avec le manganèse, le magnésium, l'étain ou le Galfan. Le métal particulaire présent dans la composition est avantageusement sous forme de poudre, de différentes structures géométriques homogènes ou hétérogènes, notamment les formes sphériques, lamellaires, lenticulaires ou d'autres formes spécifiques. Le métal particulaire a avantageusement une granulométrie comprise entre 0 et 100 µm, bornes non incluses, encore plus avantageusement comprise entre 0 et 40 µm, bornes non incluses.

Lorsque le métal particulaire est un alliage ou un mélange de zinc et d'aluminium, l'aluminium peut éventuellement être présent en des quantités très faibles, par exemple 1 à 5 % en poids du métal particulaire, tout en fournissant néanmoins un revêtement d'aspect brillant. Habituellement, l'aluminium représente au moins 5 % en poids du métal particulaire, ainsi le rapport pondéral de l'aluminium au zinc est de l'ordre de 0,5:9,5. D'un autre côté, pour des raisons d'économie, l'aluminium ne représente pas plus d'environ 50 % en poids du zinc et de l'aluminium total, si bien que le rapport pondéral de l'aluminium au zinc peut atteindre 1:1. La teneur en métal particulaire dans la composition solide sera telle qu'in fine la teneur en métal particulaire de la composition de revêtement sera supérieure à 0 % et ne dépassera pas environ 80 % en poids du poids total de la composition de revêtement pour maintenir le meilleur aspect de revêtement et représentera habituellement au moins 10 % en poids pour obtenir un aspect de revêtement brillant.

La composition solide comprend avantageusement plus de 0 % à 80 % en poids, en particulier de 35 à 70 %, plus particulièrement de 45 à 70% en poids, par rapport au poids total de la composition solide, dudit métal particulaire.

Dans un mode de réalisation, le revêtement comprend avantageusement de 0 à 80% en poids, plus avantageusement de 10 à 75% en poids, par rapport au poids total du revêtement, dudit métal particulaire.

La composition solide selon l'invention est avantageusement obtenue par déshydratation d'une composition aqueuse dans laquelle on a introduit ledit métal particulaire, ledit précurseur de titanate et/ou de zirconate, ledit silane, éventuellement ledit silicate, et de l'eau.

La composition aqueuse est avantageusement à base de 5 à 25 % en poids, plus avantageusement de 7 à 20 % en poids, encore plus avantageusement de 7 à 17% en poids, par rapport au poids total de la composition aqueuse, dudit silane. Cette quantité correspond à la quantité introduite dudit silane lors de la préparation de la composition aqueuse. Une fois que tous les composés de la composition aqueuse ont été introduits, ils peuvent/vont réagir entre eux pour former de nouveaux composés, on parlera alors en quantité d'éléments Si.

Ainsi, dans la composition solide selon l'invention, la teneur en élément Si (masse atomique = 28 g/mol) est avantageusement comprise entre 0 (non inclus) et 5 %, avantageusement entre 1 et 4 %, plus avantageusement entre 1 et 3 %, en poids par rapport au poids total de la composition solide.

La composition aqueuse est avantageusement à base de 0 à 5 % en poids, plus avantageusement de 0 à 1.5 %, encore plus avantageusement de 0 à 1% en poids, par rapport au poids total de la composition aqueuse, dudit silicate. Cette quantité correspond également à la quantité introduite dudit silicate lors de la préparation de la composition aqueuse.

La composition aqueuse est avantageusement à base de 1 à 20% en poids, plus avantageusement de 3 à 10% en poids, par rapport au poids total de la composition aqueuse, dudit précurseur de titanate, dudit précurseur de zirconate ou de leurs mélanges.

La composition aqueuse est avantageusement à base de 1 à 20% en poids, plus avantageusement de 3 à 10% en poids, par rapport au poids total de la composition aqueuse, dudit précurseur de titanate. Dans cette variante, avantageusement la composition aqueuse ne comprend pas de précurseur de zirconate.

Ces quantités correspondent aux quantités introduites dudit précurseur de titanate, dudit précurseur de zirconate ou de leur mélange lors de la préparation de la composition aqueuse. Une fois que tous les composés de la composition aqueuse ont été introduits, ils peuvent/vont réagir entre eux pour former de nouveaux composés, on parlera alors en quantité d'éléments Ti et/ou d'éléments Zr.

Ainsi, dans la composition solide selon l'invention, la teneur en élément Ti (masse atomique = 48 g/mol) et/ou en élément Zr (masse atomique = 91 g/mol) est avantageusement comprise entre 0 (non inclus) et 10 %, avantageusement entre 1,5 et 6 % en poids par rapport au poids total de la composition solide. Dans une variante avantageuse, la composition solide ne comprend pas de précurseur de zirconate et la teneur en élément Ti (masse atomique = 48 g/mol) est avantageusement comprise entre 0 (non inclus) et 5 %, avantageusement entre 1,5 et 3 % en poids par rapport au poids total de la composition solide.

Le métal particulaire peut renfermer en quantité mineure un ou plusieurs solvants, par exemple du dipropylène-glycol et/ou du white spirit, notamment lorsque le métal a été préparé sous forme lamellaire. Les métaux particulaires renfermant du solvant sont habituellement utilisés sous la forme de pâtes, qui peuvent être utilisées directement avec d'autres ingrédients de la composition. Cependant, les métaux particulaires peuvent également être utilisés sous une forme sèche dans la composition aqueuse à déshydrater.

La déshydratation peut être conduite par tout moyen connu de l'homme de l'art tel que par exemple la lyophilisation, la zéodratation, l'atomisation, ou l'évaporation, notamment l'évaporation sous vide. Avantageusement la composition solide est obtenue selon le procédé décrit plus loin.

Par « composition aqueuse », on entend, au sens de la présente invention une composition comprenant comme solvant majoritaire, en poids, de l'eau ou un mélange eau/alcool. Ainsi, les termes « composition aqueuse » englobent également des compositions hydroalcooliques. Par « alcool », on entend ici tout alcool léger, c'est-à-dire ayant moins de 10 atomes de carbone, et miscible à l'eau, tel que le méthanol, l'éthanol, l'isopropanol, le n-propanol, le butanol, l'octylèneglycol.

Dans la présente invention, ladite composition aqueuse comprend avantageusement au moins 15%, en poids, par rapport au poids total de ladite composition aqueuse, d'eau, plus avantageusement au moins 25% en poids d'eau, encore plus avantageusement au moins 30% en poids d'eau. Dans le cas où la composition aqueuse a pour solvant majoritaire un mélange eau/alcool, ladite composition aqueuse comprend avantageusement au moins 20 % en poids, par rapport au poids total de ladite composition aqueuse, du mélange eau/alcool, plus avantageusement au moins 30% en poids du mélange eau/alcool, encore plus avantageusement au moins 35% en poids du mélange eau/alcool, encore plus avantageusement au moins 40% en poids du mélange eau/alcool.

Il a été découvert que la composition solide était par la suite plus facilement réhydratable lorsque la composition aqueuse initiale comprenait également un solvant organique lourd, un liquide ionique, ou leurs mélanges.

Ainsi, dans un mode de réalisation avantageux de l'invention la composition solide est obtenue par déshydratation de la composition aqueuse décrite précédemment comprenant en outre un solvant organique lourd, un solvant ionique, ou leurs mélanges. En particulier, par déshydratation de ladite composition aqueuse comprenant de 0,5 à 15 % en poids, avantageusement de 0,5 à 11 % en poids, par rapport au poids total de ladite composition aqueuse, de solvant organique lourd, de liquide ionique, ou de leurs mélanges. On entend par « solvant organique lourd » dans le cadre de la présente invention, un solvant organique miscible dans l'eau, dont la tension de vapeur à 20°C est de préférence inférieure à 4 mmHG, avantageusement inférieure à 2 mmHG.

A titre de solvant organique lourd, on peut notamment utiliser les solvants glycoliques tels que les éthers de glycol, en particulier le diéthylène-glycol, le triéthylène-glycol et le dipropylène-glycol, les acétates, le propylène-glycol, le polypropylène-glycol, les alcools, les cétones, l'éther méthylique de propylène glycol, l'isobutyrate de triméthyl-2,2,4 pentanediol (1,3) (texanol), le white spirit ainsi que leurs mélanges.

Le dipropylène-glycol est particulièrement avantageux, notamment pour des raisons économiques et de protection de l'environnement.

A titre de solvant organique lourd, on peut également utiliser les esters, tels que le lactate d'éthyle, l'oléate de méthyle ou les méthyl- ou éthyl- esters d'acides gras.

Les liquides ioniques sont des sels possédant une température de fusion inférieure à 100°C, tels que décrit dans l'ouvrage « Electrodeposition from ionic Liquids » edited by Frank Endres, Douglas MacFarlane,and Andrew Abbott et, dans le cadre de la présente invention, inférieures à la température ambiante. Les cations sont généralement de type dialkylimidazolium, tétraalkylammonium, tétraalkylephosphonium ou alkylpyridium. Les anions sont généralement de type tétrafluoroborate, hexafluorophosphate, halogénure, mésylate, tosylate, triflate ou acétate.

La composition solide selon l'invention peut ensuite être réhydratée, sans difficulté, pour donner une composition aqueuse comprenant un métal particulaire, un liant à base de silane et de titanate et/ou de zirconate.

D'une manière surprenante, il a été constaté qu'une composition solide à base d'un précurseur de silicium et d'un précurseur de titanate et/ou de zirconium pouvait facilement être réhydratée alors qu'une composition solide à base uniquement d'un précurseur de silicium ne pouvait pas être réhydratée.

La réhydratation est conduite par ajout d'eau, avantageusement sous agitation. En plus de l'eau, on peut également ajouter un solvant organique ou un liquide ionique, dans des proportions massiques correspondant à celles décrites précédemment pour la composition aqueuse initiale, avantageusement en une quantité inférieure ou égale à 15 %, avantageusement inférieure ou égale à 11% en poids, allant ainsi de 0% à 15% en poids, avantageusement de 0% à 11% en poids, par rapport au poids total du mélange eau + (solvant organique lourd, liquide ionique et leurs mélanges). La quantité d'eau, et éventuellement de solvant organique lourd ou liquide ionique, ajoutée correspond généralement à la quantité de liquide qui était présente dans la composition aqueuse initiale, afin d'atteindre le même taux d'extrait sec. Dans un autre mode de réalisation, la quantité d'eau, et éventuellement de solvant organique lourd ou liquide ionique, ajoutée peut être plus élevée que la quantité de liquide qui était présente dans la composition aqueuse initiale pour augmenter la stabilité après réhydratation. Ainsi, la composition aqueuse initiale peut être plus concentrée pour augmenter la productivité lors de la déshydratation et être réhydratée à un extrait sec plus bas pour obtenir une bonne stabilité de la composition finale.

Le taux d'extrait sec de la composition réhydratée visé varie avantageusement de 35 % à 50 %, plus avantageusement de 38 % à 45 %. Le taux d'extrait sec de la composition aqueuse initiale varie avantageusement de 35 % à 60 %, plus avantageusement de 35 % à 50 %, encore plus avantageusement de 38 % à 45 %.

La composition aqueuse réhydratée est stable, au moins aussi stable que la composition aqueuse initiale, voire plus stable.

Selon une variante avantageuse, on ajoute à la composition solide, avant ou après déshydratation, un ou des pigments inhibiteurs de corrosion tels que le tri- ou polyphosphate d'aluminium, les phosphates, les molybdates, les silicates alcalins ou alcalino-terreux tels que le silicate de sodium, de potassium ou de lithium, et borates de zinc, de strontium, de calcium, de baryum et leurs mélanges, à des taux tels qu'une fois réhydratée, la composition comprenne de 0,2 à 7 % en poids, avantageusement 0,2 à 4% en poids, dudit pigment, par rapport au poids total de la composition solide réhydratée.

Selon une variante avantageuse, on ajoute à la composition solide, avant ou après déshydratation, un agent mouillant, selon une teneur telle qu'une fois réhydratée, la composition comprenne avantageusement moins de 4 % en poids, avantageusement entre 0,1 à 4% en poids, dudit agent mouillant par rapport au poids total de la composition.

Selon une variante avantageuse, on ajoute à la composition solide, avant ou après déshydratation, un modificateur de pH, généralement choisi parmi les oxydes et les hydroxydes de métaux alcalins, avantageusement le lithium et le sodium, les oxydes et les hydroxydes des métaux appartenant aux groupes IIA et IIB du tableau périodique, tels que les composés de strontium, calcium, baryum, magnésium et zinc. Le modificateur de pH peut également être un carbonate ou un nitrate des métaux précités.

Selon une variante avantageuse, on ajoute à la composition solide, avant ou après déshydratation, des phosphates, des substituants contenant du phosphore, tels que le ferrophosphate (pigment), des sels non organiques, selon une teneur telle qu'une fois réhydratée, la composition en comprenne avantageusement moins de 5 %, avantageusement moins de 2 %, en poids par rapport au poids de la composition solide réhydratée.

La composition selon l'invention est avantageusement exempte de chrome VI. La composition peut cependant renfermer du chrome sous une forme soluble ou non comme, par exemple, du chrome métallique ou du chrome au degré d'oxydation III.

La présente invention a également pour objet un procédé de préparation d'une composition solide selon l'invention, comprenant une étape de déshydratation d'une composition aqueuse à base dudit métal particulaire, dudit précurseur de titanate et/ou de zirconate, dudit silane, éventuellement dudit silicate, et d'eau, telle que définie précédemment.

Dans un premier mode de réalisation, la déshydratation est conduite par lyophilisation.

La lyophilisation est une méthode particulièrement bien connue de dessication sous vide, à basse température, de produits liquides préalablement congelés. La lyophilisation consiste en l'élimination progressive de l'eau du produit préalablement congelé par sublimation.

Dans ce premier mode de réalisation, le procédé comprend une étape de congélation de ladite composition aqueuse puis une étape de lyophilisation.

Ladite composition aqueuse peut par exemple être congelée par l'emploi d'azote liquide.

La lyophilisation est avantageusement conduite à une température allant de -70°C à -90°C, avantageusement -80°C, et à une pression comprise entre 0,05 mBar et 0,3 mBar, avantageusement entre 0,1 mBar et 0,26 mBar.

Dans un deuxième mode de réalisation, la déshydratation est conduite par zéodratation.

Le procédé de zéodratation est une méthode de dessication sous vide en présence d'un lit de zéolithe. Elle ne nécessite pas d'étape de congélation.

Dans un troisième mode de réalisation, la déshydratation est conduite par évaporation sous vide, avantageusement à une température proche de la température ambiante.

Le procédé d'évaporation sous vide est une méthode très connue permettant d'évaporer l'eau à une température significativement inférieure à la température standard d'ébullition.

Dans le cadre de la présente invention, l'évaporation sous vide est avantageusement conduite à une température inférieure à 60°C, plus avantageusement allant de 35°C à 50°C. Le vide peut par exemple être obtenu avec une pression allant de 15 mBar à 90 mBar. En particulier, à l'échelle laboratoire, le vide peut par exemple être obtenu avec une pression allant de 15 à 25 mBar, notamment 20 mBar; tandis qu'à l'échelle industrielle, le vide peut par exemple être obtenu avec une pression allant de 30 à 85 mbar, notamment entre 50 et 80 mbar.

Alternativement, la déshydratation peut se faire par atomisation. L'atomisation est une méthode de déshydratation d'un liquide sous forme de poudre par passage dans un flux d'air chaud. Avantageusement, dans le cadre de la présente invention, les paramètres de l'atomisation sont déterminés pour obtenir une température de poudre inférieure à 60°C, plus avantageusement allant de 35°C à 50°C.

Suite à l'obtention de la composition solide, par déshydratation selon une méthode adaptée, en particulier une des quatre méthodes décrites précédemment, le procédé peut comprendre une étape de réduction de la taille des particules de poudre, par exemple par le biais d'une action mécanique qui n'affecte pas l'intégrité des particules métalliques. Cette action mécanique éventuelle appliquée aux particules solides obtenues, peut être mise en oeuvre pour ajuster la finesse de la poudre recherchée. Cette étape affectera la densité apparente de la poudre obtenue et pourra accélérer l'étape ultérieure de réhydratation.

Selon un autre mode de réalisation, suite à l'obtention de la composition solide, par déshydratation selon une méthode adaptée, notamment par atomisation, le procédé peut comprendre une étape de granulation permettant d'augmenter la taille des particules de poudre. Cette étape affectera également la densité apparente de la poudre obtenue et pourra accélérer l'étape ultérieure de réhydratation.

La préparation d'une composition solide, facilement réhydratable, permet notamment de réduire les volumes de stockage. Elle permet également d'augmenter la durée de vie de la composition de revêtement puisque la composition solide est sensiblement moins sensible à une dégradation qu'une composition aqueuse et qu'après hydratation, la composition aqueuse obtenue est au moins aussi stable que la composition aqueuse qui n'a pas été soumise au procédé selon l'invention.

L'invention a également pour objet un procédé de préparation d'une composition aqueuse comprenant au moins un métal particulaire, un liant à base de silane et de titanate et/ou de zirconate comprenant une étape d'hydratation d'une composition solide selon l'invention ou obtenue par le procédé selon l'invention.

L'hydratation, plus précisément la réhydratation, est conduite par ajout d'eau, avantageusement sous agitation. En plus de l'eau, on peut également ajouter un solvant organique ou un liquide ionique, dans des proportions massiques correspondant à celles décrites précédemment pour la composition aqueuse initiale, avantageusement en une quantité inférieure ou égale à 15% en poids, avantageusement inférieure ou égale à 11% en poids, allant ainsi de 0% à 15 % en poids, avantageusement de 0% à 11% en poids, par rapport au poids total du mélange eau + (solvant organique, liquide ionique et leurs mélanges). La quantité d'eau, et éventuellement de solvant organique ou liquide ionique, ajoutée correspond généralement à la quantité de liquide qui était présente dans la composition aqueuse initiale, afin d'atteindre le même taux d'extrait sec. Selon un autre mode de réalisation de l'invention, la composition aqueuse initiale peut être plus concentrée pour augmenter la productivité lors de la déshydratation et être réhydratée à un extrait sec plus bas pour obtenir une bonne stabilité de la composition finale.

Le taux d'extrait sec visé varie avantageusement de 30 à 50, plus avantageusement de 38 à 45. Le taux d'extrait sec de la composition aqueuse initiale varie avantageusement de 35 % à 60 %, plus avantageusement de 35 % à 50 %, encore plus avantageusement de 38 % à 45 %

La composition aqueuse réhydratée est stable, au moins aussi stable que la composition aqueuse initiale, voire plus stable.

La composition aqueuse réhydratée est adaptée pour protéger de la corrosion des pièces métalliques.

Selon une variante avantageuse, on ajoute à la composition de revêtement aqueuse réhydratée un agent épaississant. L'agent épaississant est avantageusement choisi dans le groupe constitué par les dérivés cellulosiques tels que l'hydroxyméthylcellulose, l'hydroxyéthylcellulose, l'hydroxypropylcellulose, l'acétobutyrate de cellulose, la gomme xanthane, les micro ou nano fibrilles de cellulose, les épaississants associatifs de type polyuréthane ou acrylique, les silices, les silicates tels que les silicates de magnésium et/ou de lithium éventuellement traités ou les argiles organophiles ainsi que leurs mélanges. La teneur en agent épaississant est avantageusement inférieure à 7 % en poids par rapport au poids total de la composition, avantageusement comprise entre 0,005 et 7 % en poids par rapport au poids total de la composition.

Cette composition aqueuse réhydratée est en particulier adaptée à la préparation d'un revêtement anticorrosion pour pièces métalliques. Le revêtement est obtenu par application de la composition de revêtement selon l'invention sur un substrat, en particulier métallique, avantageusement par pulvérisation, trempage-égouttage ou trempage-centrifugation, la couche de revêtement étant ensuite soumise à une opération de cuisson conduite de préférence à une température comprise entre 120°C et 350°C, pendant environ 10 à 60 minutes, par apport d'énergie thermique, telle que par convection ou infra-rouge, ou pendant environ 30 secondes à 5 minutes par induction.

En particulier, le revêtement anti-corrosion résultera d'une opération d'application impliquant, préalablement à une opération de cuisson, une opération de séchage des pièces, avantageusement métalliques, revêtues, par apport d'énergie thermique, telle que par convection, infra-rouge ou induction, à une température comprise entre 30 et 250°C, avantageusement de l'ordre de 70°C, en convection ou en infra-rouge pendant 10 à 30 minutes sur ligne ou pendant environ 30 secondes à 5 minutes par induction. Avant le revêtement, il est judicieux dans la plupart des cas d'éliminer la matière étrangère de la surface du substrat, notamment par nettoyage et dégraissage soigneux. Dans ces conditions, l'épaisseur du film sec de revêtement ainsi appliqué est avantageusement comprise entre 3 µm (11 g/m²) et 30 µm (110 g/m²) et de préférence entre 4 µm (15 g/m²) et 12 µm (45 g/m²), plus particulièrement entre 5 µm (18 g/m²) et 10 µm (40 g/m²).

Le substrat est avantageusement métallique, de préférence en acier ou en acier revêtu de zinc ou d'une couche à base de zinc déposés par différents modes d'application incluant le dépôt mécanique, à la fonte et l'aluminium.

Le substrat métallique peut être traité au préalable, par exemple par un traitement au chromate ou au phosphate. Ainsi, le substrat peut être prétraité pour avoir, par exemple, un revêtement de phosphate de fer selon une quantité de 0,1 à 1 g/m² ou un revêtement de phosphate de zinc selon une quantité de 1,5 à 4 g/m².

### EXEMPLES

Les exemples ci-après montrent des manières selon lesquelles la présente invention peut être mise en oeuvre, mais ne limitent en aucune façon la présente invention.
GPC (Chromatographie en phase gazeuse)
Les conditions d'analyse sont les suivantes :
   Eluant = eau - Débit = 0.8ml/min - Dilution = 1 qsp 60 - injection = 100µL - Détecteur :
   Indice de Réfraction à 35°C - Colonnes de type TSK Gel thermostatées à 40°C : 1 pré-colonne + 2 colonnes G2500PWXL + 1 colonne G3000 PWXL + 1 colonne G4000 PWXL.

### Viscosité

Mesure d'un temps d'écoulement à la coupe consistométrique de type DIN 4 ou AFNOR 4.

### Préparation des panneaux d'essai :

Sauf indication contraire, les panneaux d'essai sont typiquement des panneaux d'acier à faible teneur en carbone, laminés à froid. Ils peuvent être préparés tout d'abord par immersion dans une solution de nettoyage. Ensuite, les panneaux peuvent être frottés avec un tampon de nettoyage puis rincés à l'eau et de nouveau immergés dans la solution de nettoyage. Après l'élimination de la solution, les panneaux sont rincés avec de l'eau du robinet et séchés.

### Préparation des vis d'essai :

Les vis sont dégraissées en milieu alcalin à 80°C puis rincées avec eau et séchées avant d'être grenaillées.

### Application du revêtement aux parties d'essai et poids du revêtement :

Les parties propres sont revêtues, de façon typique, en les plongeant dans la composition de revêtement, en retirant et en drainant la composition en excès de celle-ci, quelquefois avec une action d'agitation modérée, puis elles sont ensuite cuites à une température correspondant à la technologie qui a été réhydratée. Les poids de revêtement (g/m²) sont déterminés par pesées comparatives avant et après revêtement.

### Essai de résistance à la corrosion - heures de tenue au brouillard salin :

Les tests de brouillard salin sont menés selon la norme ISO9227 (mai 2012).

Une note à 10 correspond à a trace de rouille rouge sur la pièce.

### Exemple comparatif 1 : Déshydratation par lyophilisation ou par évaporation sous vide d'une composition de revêtement à base d'une matrice liant sol/gel obtenus à partir de précurseurs à base uniquement de Si

### Déshydratation :

### • lyophilisation

1 litre d'une composition CC1, répartie dans 4 ballons, a été lyophilisée, après congélation préalable dans de l'azote liquide. L'opération de lyophilisation, effectuée à -80°C et à une pression comprise entre 0,1 mBar et 0,26 mBar, a nécessité 24h pour obtenir un solide déshydraté.

La composition a été soumise à distillation préalablement à la lyophilisation afin d'éliminer par évaporation l'éthanol résiduel et l'azéotrope eau/éthanol issus des réactions des monomères, et de l'eau a ensuite été ajoutée afin d'obtenir la même quantité d'extrait sec final.

La poudre obtenue a été stockée pendant 2 semaines à température ambiante et pression atmosphérique.

### • Evaporation sous vide

280g d'une composition CC1 ont été évaporés durant 5h sous vide (20 mbars) à une température de bain-marie de 40°C afin d'obtenir un solide pouvant être finement broyé. La composition a été soumise à distillation préalablement à l'évaporation sous vide afin d'éliminer par évaporation l'éthanol résiduel et l'azéotrope eau/éthanol issus des réactions des monomères, et de l'eau a ensuite été ajoutée afin d'obtenir la même quantité d'extrait sec final.

La poudre obtenue a été stockée pendant 1 jour à température ambiante et pression atmosphérique.

Dans les deux procédés, la composition CC1 est préparée à partir des composés selon les données du tableau suivant (% massiques introduits* par rapport au poids total initial) :

**Tableau 1**

| | CC1 |
|---|---|
| Zn¹ | 27,3 |
| Al² | 6,4 |
| Glycidoxypropyltriéthoxysilane | 8 |
| orthosilicate de tétraéthyle | 2 |
| dipropylène-glycol | 10 |
| Eau | 37,6 |
| Additifs | 8,7 |

| | |
|---|---|
| ¹ Zinc sous forme de pâte à environ 92 % dans le white spirit ² Alu Chromal VIII poudre commercialisée par Eckart Werke (extrait sec d'Al : 80 % en poids) **Les teneurs données dans le Tableau 1 sont les teneurs initialement introduites dans le mélange. En effet, certains des constituants introduits peuvent ou vont réagir entre eux, au moins partiellement, lors des différentes phases de fabrication de la composition, ou lors de la cuisson ultérieure, modifiant ainsi la composition telle qu'elle est préparée au départ. Ceci est également valable pour les Tableaux 2 et 5.* | |

### Réhydratation :

Des essais de réhydratation de la poudre issue de composition CC1, obtenue après lyophilisation ou après évaporation sous vide, ont été tentés sans succès. Dans les deux cas, la poudre de composition à base de liant Si obtenue n'est pas réhydratable.

### Exemple 1 : Déshydratation par lyophilisation ou par évaporation sous vide d'une composition de revêtement à base d'une matrice liant soligel obtenus à partir de précurseurs à base de Si et de Ti

### Déshydratation :

### • Lyophilisation

1 litre d'une composition Cl1, répartie dans 4 ballons, a été lyophilisée, après congélation préalable dans de l'azote liquide. L'opération de lyophilisation, effectuée à -80°C et à une pression comprise entre 0,1 mBar et 0,26 mBar, a nécessité 24h pour obtenir un solide déshydraté ultérieurement broyé en poudre fine dont la taille de particules varie environ de 2 µm à quelques mm.

La composition a été soumise à distillation préalablement à la lyophilisation afin d'éliminer par évaporation l'éthanol résiduel et l'azéotrope eau/éthanol issus des réactions des monomères, et de l'eau a ensuite été ajoutée afin d'obtenir la même quantité d'extrait sec final.

La poudre obtenue a été stockée pendant 2 à 3 semaines à température ambiante et pression atmosphérique.

### • Evaporation sous vide

350g d'une composition Cl1 ont été évaporés durant 7h30 sous vide (20 mbars) à une température de bain-marie de 40°C afin d'obtenir un solide pouvant être finement broyé.

La composition a été soumise à distillation préalablement à l'évaporation sous vide afin d'éliminer par évaporation l'éthanol résiduel et l'azéotrope eau/éthanol issus des réactions des monomères, et de l'eau a ensuite été ajoutée afin d'obtenir la même quantité d'extrait sec final.

La poudre obtenue a été stockée pendant 1 jour à température ambiante et pression atmosphérique.

La composition de la composition Cl1 est préparée à partir des composés selon les données du tableau suivant (% massiques introduits par rapport au poids total initial) :

**Tableau 2**

| | Cl1 |
|---|---|
| Zn¹ | 23,7 |
| Al² | 1,6 |
| Glycidoxypropyltriéthoxysilane | 13,8 |
| orthosilicate de tétraéthyle | 0,7 |
| Tétra ethoxytitanate | 4,4 |
| dipropylène-glycol | 5,5 |
| Eau | 43,1 |
| Additifs | 7,2 |

| | |
|---|---|
| ¹ Zinc sec ² Alu Chromal VIII poudre commercialisée par Eckart Werke | |

Dans Cl1, le ratio molaire Ti/Si est de 27/73.

### Réhydratation :

La poudre issue de la composition Cl1, qu'elle soit obtenue par lyophilisation ou par évaporation sous vide, a été ensuite facilement réhydratée à une vitesse d'agitation d'environ 300 à 500 tr/min, par ajout d'eau déminéralisée, de manière à obtenir un liquide au même extrait sec en poids que la composition liquide de départ (taux d'extrait sec = 41-42 %). La composition ainsi obtenue est dénommée :
- CI'1 lorsque la poudre est obtenue par lyophilisation
- CI"1 lorsque la poudre est obtenue par évaporation sous vide.

La stabilité des compositions Cl1 / CI'1 / CI"1 après épaississement par ajout d'un épaississant cellulosique, sous agitation, une fois la composition totalement réhydratée, et après un mois de stockage à 20°C est équivalente, tel que cela ressort du tableau suivant :

**Tableau 3**

| | Cl1 | Cl'1 | Cl"1 |
|---|---|---|---|
| Viscosité CA4 (sec) à environ 30 jours, 20°C | 103 | 105 | 98 |
| pH, à environ 30 jours, 20°C | 8,4 | 8,2 | 8,2 |

Les performances de tenue au brouillard salin obtenues sont équivalentes, tel que cela ressort du tableau suivant :

**Tableau 4**

| | Cl1 | Cl'1 | Cl"1 |
|---|---|---|---|
| poids de revêtement (g/m²) | 27,4 | 27,4 | 28,3 |
| Tenue au brouillard salin (heures) à t=0 Note 10 | 1368 | 1176 | 1368 |

### Exemple 2 : Déshydratation par lyophilisation ou par évaporation sous vide d'une composition de revêtement à base matrice liant sol/gel obtenue à partir de précurseurs à base de Si et de Ti, enrichie en Ti

### Déshydratation :

### • Lyophilisation

1 litre d'une composition Cl2, répartie dans 4 ballons, a été lyophilisée, après congélation préalable dans de l'azote liquide. L'opération de lyophilisation, effectuée à -80°C et à une pression comprise entre 0,1 mBar et 0,26 mBar, a nécessité 24h pour obtenir un solide déshydraté ultérieurement broyé en poudre fine dont la taille de particules varie environ de 2 µm à quelques mm.

La composition a été soumise à distillation préalablement à la lyophilisation afin d'éliminer par évaporation l'éthanol résiduel et l'azéotrope eau/éthanol issus des réactions des monomères, et de l'eau a ensuite été ajoutée afin d'obtenir la même quantité d'extrait sec final.

La poudre obtenue a été stockée pendant 3 semaines environ à température ambiante et pression atmosphérique.

### • Evaporation sous vide

1038g d'une composition Cl2 ont été évaporés durant 2h30 sous vide (20 mbars) à une température de bain-marie de 40°C afin d'obtenir un solide pouvant être finement broyé. La composition a été soumise à distillation préalablement à l'évaporation sous vide afin d'éliminer par évaporation l'éthanol résiduel et l'azéotrope eau/éthanol issus des réactions des monomères, et de l'eau a ensuite été ajoutée afin d'obtenir la même quantité d'extrait sec final.

La poudre obtenue a été stockée pendant 2 semaines à température ambiante et pression atmosphérique.

Les composés de base de la composition Cl2 sont donnés dans le tableau suivant (% massiques introduits par rapport au poids total initial) :

**Tableau 5**

| | Cl2 |
|---|---|
| Zn¹ | 27,8 |
| Al² | 3,6 |
| Glycidoxypropyltriéthoxysilane | 7,2 |
| Tétra-isopropoxytitanate | 7,2 |
| Eau | 48,5 |
| Additifs | 5,7 |

| | |
|---|---|
| ¹ Zinc sec ² Alu Silbercote AQ E 2169 F3X | |

Dans Cl2, le ratio molaire Ti/Si est de 50/50. Après lyophilisation, le taux d'extrait sec est de 96.8%.

### Réhydratation :

La poudre issue de la composition Cl2, qu'elle soit obtenue par lyophilisation ou par évaporation sous vide, a été ensuite facilement réhydratée à une vitesse d'agitation d'environ 300 à 500 tr/min, par ajout d'eau déminéralisée, de manière à obtenir un liquide au même extrait sec en poids que la composition liquide de départ.

### Exemple 3 : Déshydratation par atomisation d'une composition de revêtement à base d'une matrice liant sol/gel obtenue à partir de précurseurs à base de Si et de Ti

### Déshydratation :

Environ 2.2 kg de la composition Cl3 diluée à un extrait sec de 35% ont été déshydratés par atomisation. Les paramètres d'atomisation ont été réglés de façon à obtenir une poudre sèche de température inférieure à 40°C.

La poudre obtenue a été stockée pendant 2 semaines à température ambiante et pression atmosphérique.

Les composés de base de la composition Cl3 sont donnés dans le tableau suivant (% massiques introduits par rapport au poids total initial) :

**Tableau 6**

| | Cl3 |
|---|---|
| Zn¹ | 23.7 |
| Al² | 1.6 |
| Glycidoxypropyltriéthoxysilane | 13.8 |
| orthosilicate de tétraéthyle | 0,7 |
| Tétra ethoxytitanate | 4,4 |
| dipropylène-glycol | 2,5 |
| Eau | 46,1 |
| Additifs | 7,2 |

| | |
|---|---|
| ¹ Zinc sec ² Alu Silbercote AQ E 2169 F3X | |

Dans Cl3, le ratio molaire Ti/Si est de 27/73. Après atomisation, le taux d'extrait sec est de 90.3%.

### Réhydratation :

La poudre issue de la composition Cl3 a été facilement réhydratée (<24h) à une vitesse d'agitation d'environ 300 à 500 tr/min, par ajout d'eau déminéralisée de manière à obtenir un liquide au même extrait sec en poids que la composition liquide de départ (taux d'extrait sec = 41-42 %). La composition ainsi obtenue est dénommée :
- Cl3' lorsque la poudre est obtenue par atomisation
- Les compositions Cl3 / Cl3' après épaississement par ajout d'un épaississant cellulosique, sous agitation, une fois la composition totalement réhydratée, présentent les mêmes paramètres, tel que cela ressort du tableau suivant :

**Tableau 7**

| | Cl3 | Cl3' |
|---|---|---|
| Viscosité CA4 (sec) à environ 30 jours, 20°C | 126 | 101 |
| pH, à environ 30 jours, 20°C | 8,4 | 8,3 |

Les performances de tenue au brouillard salin obtenues sur vis sont au moins équivalentes, voire supérieures, tel que cela ressort du tableau suivant :

**Tableau 8**

| | Cl3 | Cl3' |
|---|---|---|
| poids de revêtement (g/m²) à t=0 | 26.1 | 27.7 |
| Tenue au brouillard salin (heures) à t=0 Note 10 | 672 | 1296 |
| poids de revêtement (g/m²) à t=1 mois 20°C | 25.3 | 23.8 |
| Tenue au brouillard salin (heures) à t=1 mois 20°C Note 10 | 720 | 672 |

### Exemple 4 : Déshydratation par évaporation sous vide d'une composition de revêtement à base d'une matrice liant sol/gel obtenue à partir de précurseurs à base de Si et de Ti

### Déshydratation :

978 g de la composition Cl4 d'extrait sec 60.7% ont été évaporés durant 7h05 sous vide (20 mbars) à une température de bain-marie de 40°C afin d'obtenir un solide pouvant être finement broyé.

La poudre obtenue a été stockée pendant 12 jours à température ambiante et pression atmosphérique.

Les composés de base de la composition Cl4 sont donnés dans le tableau suivant (% massiques introduits par rapport au poids total initial) :

**Tableau 9**

| | Cl4 |
|---|---|
| Zn¹ | 29.1 |
| Al² | 4.1 |
| Glycidoxypropyltriméthoxysilane | 18.3 |
| orthosilicate de tétraéthyle | 1.4 |
| Tétra ethoxytitanate | 6 |
| dipropylène-glycol | 8 |
| Alcools (Ethanol + 3% Isopropanol) | 5.2 |
| Eau | 16.5 |
| Additifs | 11.5 |

| | |
|---|---|
| ¹ Zinc sec ² Alu Chromal VIII poudre commercialisée par Eckart Werke | |

Dans la composition Cl4 le ratio Ti/Si est de 24/76

### Réhydratation :

La poudre issue de la composition Cl4 a été facilement réhydratée (<10h) à une vitesse d'agitation d'environ 300 à 500 tr/min, par ajout d'eau déminéralisée de manière à obtenir un liquide d'extrait sec en poids de 38.6% La composition ainsi obtenue est dénommée :
- Cl4' lorsque la poudre est obtenue par évaporation sous vide

La stabilité des compositions Cl4 / Cl4' à un extrait sec de 38%, après un mois de stockage à 20°C est équivalente, tel que cela ressort du tableau suivant :

**Tableau 10**

| | Cl4 (ES=60%) | Cl4 60% dilué à 38% par ajout d'eau déminéralisée | Cl4' |
|---|---|---|---|
| Viscosité CA4 (sec) à environ 30 jours, 20°C | gel | 21 | 23 |
| pH, à environ 30 jours, 20°C | NA | 7.7 | 7.9 |

## Revendications

1. Composition solide, réhydratable à l'eau destinée à la préparation d'une composition de revêtement anti-corrosion de pièces métalliques à base de métal particulaire en dispersion aqueuse, ladite composition solide étant à base d'un métal particulaire ou d'un mélange de métaux particulaires, d'un précurseur de titanate et/ou d'un précurseur de zirconate et d'un silane portant au moins une fonction hydrolysable en fonction hydroxyle avec un ratio molaire Ti/Si allant de 10/90 à 60/40, ladite composition étant sous une forme pulvérulente, la taille de particules variant d'environ 2 µm à environ 3 mm.

2. Composition solide selon la revendication 1, dans laquelle le ratio molaire Ti/Si varie de 10/90 à 60/40, avantageusement de 20/80 à 50/50, plus avantageusement de 25/75 à 50/50.

3. Composition solide selon l'une quelconque des revendications précédentes, dans laquelle le précurseur de titanate est un titanate organique avantageusement choisi parmi les tétraalkyle en C₁-C₈ titanates, et le précurseur de zirconate est un zirconate organique avantageusement choisi parmi les tétraalkyle en C₁-C₈ zirconates.

4. Composition solide selon l'une quelconque des revendications précédentes, dans laquelle le silane porte en outre une fonction époxy.

5. Composition solide selon la revendication précédente, dans laquelle le silane est choisi parmi le di- ou triméthoxysilane à fonction époxy et le di- ou triéthoxysilane à fonction époxy, ainsi que leurs mélanges, en particulier comme le bêta-(3,4-époxycyclohexyl)éthyl- triméthoxysilane, le 4-(triméthoxysilyl)butane-1,2-époxyde, le gamma-glycidoxypropyltriméthoxysilane, le gamma glycidoxypopyltriéthoxysilane, l'octyltriethoxysilane, le phenyltriethoxysilane, le methyltriethoxysilane, (2-diethylphosphatoethyl) triethoxy silane, le vinyltriethoxysilane, le 3-aminopropyltriethoxysilane, le methylmethacrylate triméthoxysilane, le méthylmethacrylate triethoxysilane et leurs mélanges.

6. Composition solide selon l'une quelconque des revendications précédentes, dans laquelle la teneur en métal particulaire varie de 20 à 70% en poids, par rapport au poids total de la composition solide.

7. Composition solde selon l'une quelconque des revendications précédentes, dans laquelle le métal particulaire est choisi parmi le zinc et l'aluminium, ainsi que leurs alliages et leurs mélanges ou leurs alliages avec le manganèse, le magnésium, ou l'étain.

8. Composition solide selon l'une quelconque des revendications précédentes, à base en outre d'un silicate, avantageusement d'un alcoxyde de silicium, en particulier de l' orthosilicate de tétraéthyle.

9. Composition solide selon l'une quelconque des revendications précédentes, obtenue par déshydratation d'une composition aqueuse dans laquelle on a introduit le métal particulaire, ledit précurseur de titanate et/ou de zirconate, ledit silane, éventuellement ledit silicate, et de l'eau.

10. Composition solide selon la revendication précédente, obtenue par déshydratation de ladite composition aqueuse comprenant au moins 15% en poids, par rapport au poids total de ladite composition aqueuse, d'eau, avantageusement au moins 25% en poids d'eau, plus avantageusement au moins 30% en poids d'eau.

11. Composition solide selon l'une quelconque des revendications 9 à 10, obtenue par déshydratation de ladite composition aqueuse comprenant en outre un solvant organique, un liquide ionique, ou leurs mélanges.

12. Composition solide selon la revendication précédente, obtenue par déshydratation de ladite composition aqueuse comprenant de 0,5 à 15% en poids, avantageusement de 0,5 à 10% en poids, par rapport au poids total de ladite composition aqueuse, de solvant organique, de solvant ionique, ou de leurs mélanges.

13. Procédé de préparation d'une composition solide selon l'une quelconque des revendications précédentes, comprenant une étape de déshydratation d'une composition aqueuse comprenant ledit métal particulaire, ledit précurseur de titanate et/ou de zirconate, ledit silane, éventuellement ledit silicate, et de l'eau, telle que définie à l'une quelconque des revendications 9 à 12.

14. Procédé selon la revendication précédente, **caractérisé en ce que** la déshydratation est conduite par lyophilisation, zéodratation, évaporation sous vide, ou atomisation.

15. Procédé de préparation d'une composition aqueuse comprenant au moins un métal particulaire, un liant à base de silane et de titanate et/ou zirconate, comprenant une étape d'hydratation d'une composition solide selon l'une quelconque des revendications 1 à 12 ou obtenue par le procédé selon l'une quelconque des revendications 13 et 14.

## Patentansprüche

1. In Wasser rehydrierbare Zusammensetzung in fester Form, die zum Herstellen einer Korrosionsschutz-Beschichtungszusammensetzung metallischer Teile auf Basis von teilchenförmigem Metall in wässriger Dispersion bestimmt ist, wobei die Zusammensetzung in fester Form auf einem teilchenförmigen Metall oder einer Mischung aus teilchenförmigen Metallen, einem Titanatvorläufer und/oder einem Zirkonatvorläufer und einem Silan basiert, das mindestens eine Funktion trägt, die zu einer Hydroxylfunktion hydrolysierbar ist, mit einem Molverhältnis Ti/Si von 10:90 bis 60:40, wobei die Zusammensetzung in Pulverform vorliegt, wobei die Teilchengröße von etwa 2 µm bis etwa 3 mm variiert.

2. Zusammensetzung in fester Form nach Anspruch 1, wobei das Molverhältnis Ti/Si von 10:90 bis 60:40, vorteilhafterweise von 20:80 bis 50:50, noch vorteilhafter von 25:75 bis 50:50 variiert.

3. Zusammensetzung in fester Form nach einem der vorstehenden Ansprüche, wobei der Titanatvorläufer ein organisches Titanat ist, das vorteilhafterweise aus Ci-Cs-Tetraalkyltitanaten ausgewählt ist, und der Zirkonatvorläufer ein organisches Zirkonat ist, das vorteilhafterweise aus den C₁-C₈-Tetraalkylzirkonaten ausgewählt ist.

4. Zusammensetzung in fester Form nach einem der vorstehenden Ansprüche, wobei das Silan außerdem eine Epoxidfunktion trägt.

5. Zusammensetzung in fester Form nach dem vorstehenden Anspruch, wobei das Silan ausgewählt ist aus epoxyfunktionellem Di- oder Trimethoxysilan und epoxyfunktionellem Di- oder Triethoxysilan sowie aus deren Mischungen, insbesondere als beta-(3,4-Epoxycyclohexyl)ethyl-trimethoxysilan, 4-(Trimethoxysilyl)butan-1,2-epoxid, gamma-Glycidoxypropyltrimethoxysilan, gamma-Glycidoxypropyltriethoxysilan, Octyltriethoxysilan, Phenyltriethoxysilan, Methyltriethoxysilan, (2-Diethylphosphatoethyl)triethoxysilan, Vinyltriethoxysilan, 3-Aminopropyltriethoxysilan, Methylmethacrylat-trimethoxysilan, Methylmethacrylat-triethoxysilan und deren Mischungen.

6. Zusammensetzung in fester Form nach einem der vorstehenden Ansprüche, wobei der Gehalt an teilchenförmigem Metall zwischen 20 und 70 Gew.-% bezogen auf das Gesamtgewicht der Zusammensetzung in fester Form variiert.

7. Zusammensetzungen in fester Form nach einem der vorstehenden Ansprüche, wobei das teilchenförmige Metall aus Zink und Aluminium sowie deren Legierungen und Mischungen oder deren Legierungen mit Mangan, Magnesium oder Zinn ausgewählt ist.

8. Zusammensetzung in fester Form nach einem der vorstehenden Ansprüche, auf Basis außerdem eines Silikats, vorteilhafterweise eines Siliziumalkoxids, insbesondere Tetraethylorthosilikats.

9. Zusammensetzung in fester Form nach einem der vorstehenden Ansprüche, die durch Dehydratisierung einer wässrigen Zusammensetzung erhalten wird, in die das teilchenförmige Metall, der Titanat- und/oder Zirkonatvorläufer, das Silan, möglicherweise das Silikat und Wasser eingebracht wurden.

10. Zusammensetzung in fester Form nach dem vorstehenden Anspruch, die durch Dehydratisierung der wässrigen Zusammensetzung erhalten wird, die mindestens 15 Gew.-% bezogen auf das Gesamtgewicht der wässrigen Zusammensetzung, Wasser, vorteilhafterweise mindestens 25 Gew.-% Wasser, noch vorteilhafter mindestens 30 Gew.-% Wasser, umfasst.

11. Zusammensetzung in fester Form nach einem der Ansprüche 9 bis 10, die durch Dehydratisierung der wässrigen Zusammensetzung erhalten wird, die außerdem ein organisches Lösungsmittel, eine ionische Flüssigkeit oder deren Mischungen umfasst.

12. Zusammensetzung in fester Form nach dem vorstehenden Anspruch, die durch Dehydratisierung der wässrigen Zusammensetzung erhalten wird, die 0,5 bis 15 Gew.-%, vorteilhafterweise 0,5 bis 10 Gew.-% bezogen auf das Gesamtgewicht der wässrigen Zusammensetzung, organisches Lösungsmittel, ionisches Lösungsmittel oder deren Mischungen umfasst.

13. Herstellungsverfahren einer Zusammensetzung in fester Form nach einem der vorstehenden Ansprüche, das einen Dehydratisierungsschritt einer wässrigen Zusammensetzung umfasst, die das teilchenförmige Metall, den Titanat- oder Zirkonatvorläufer, das Silan, möglicherweise das Silikat und Wasser, wie in einem der Ansprüche 9 bis 12 definiert, umfasst.

14. Verfahren nach dem vorstehenden Anspruch, **dadurch gekennzeichnet, dass** die Dehydratisierung durch Gefriertrocknung, Zeodratation, Vakuumverdampfung oder Verdüsung durchgeführt wird.

15. Herstellungsverfahren einer wässrigen Zusammensetzung, die mindestens ein teilchenförmiges Metall, ein Bindemittel auf Basis von Silan und Titanat und/oder Zirkonat umfasst, das einen Hydratisierungsschritt einer Zusammensetzung in fester Form nach einem der Ansprüche 1 bis 12 umfasst, oder durch das Verfahren nach einem der Ansprüche 13 oder 14 erhalten wird.

## Claims

1. A solid, water-rehydratable composition intended for the preparation of an anti-corrosion coating composition for metal parts based on particulate metal in aqueous dispersion, said solid composition being based on a particulate metal or a mixture of particulate metals, a titanate precursor and/or a zirconate precursor and a silane bearing at least one function hydrolyzable to a hydroxyl function with a Ti/Si molar ratio ranging from 10/90 to 60/40, said composition being in powdered form, with a particle size ranging from about 2 µm to about 3 mm.

2. The solid composition according to claim 1, wherein the Ti/Si molar ratio varies from 10/90 to 60/40, advantageously from 20/80 to 50/50 and more advantageously 25/75 to 50/50.

3. The solid composition according to any one of the preceding claims, wherein the titanate precursor is an organic titanate advantageously selected from C₁-C₈ tetraalkyl titanates, and the zirconate precursor is an organic zirconate advantageously selected from C₁-C₈ tetraalkyl zirconates.

4. The solid composition according to any one of the preceding claims, wherein the silane additionally carries an epoxy function.

5. The solid composition according to the preceding claim, wherein the silane is selected from epoxy-functional di- or trimethoxysilane and epoxy-functional di- or triethoxysilane, as well as mixtures thereof, in particular such as beta-(3,4-epoxycyclohexyl)ethyl-trimethoxysilane, 4-(trimethoxysilyl)butane-1,2-epoxide, gamma-glycidoxypropyltrimethoxysilane, gamma-glycidoxypropyltriethoxysilane, octyltriethoxysilane, phenyltriethoxysilane, methyltriethoxysilane, (2-diethylphosphatoethyl) triethoxy silane, vinyltriethoxysilane, 3-aminopropyltriethoxysilane, methyl methacrylate trimethoxysilane, methyl methacrylate triethoxysilane and mixtures thereof.

6. The solid composition according to any one of the preceding claims, wherein the particulate metal content ranges from 20 to 70% by weight based on the total weight of the solid composition.

7. The solid composition according to any one of the preceding claims, wherein the particulate metal is selected from zinc and aluminum and their alloys and mixtures thereof or alloys thereof with manganese, magnesium, or tin.

8. The solid composition according to any one of the preceding claims, further based on a silicate, advantageously a silicon alkoxide, in particular tetraethyl orthosilicate.

9. The solid composition according to any one of the preceding claims, obtained by dehydration of an aqueous composition into which said particulate metal, said titanate and/or zirconate precursor, said silane, optionally said silicate, and water have been introduced.

10. The solid composition according to the preceding claim, obtained by dehydration of said aqueous composition comprising at least 15% by weight, based on the total weight of said aqueous composition, of water, advantageously at least 25% by weight of water, more advantageously at least 30% by weight of water.

11. The solid composition according to any one of claims 9 to 10, obtained by dehydration of said aqueous composition further comprising an organic solvent, an ionic liquid, or mixtures thereof.

12. The solid composition according to the preceding claim, obtained by dehydration of said aqueous composition comprising from 0.5 to 15% by weight, advantageously from 0.5 to 10% by weight based on the total weight of said aqueous composition, of organic solvent, ionic solvent, or mixtures thereof.

13. A process for preparing a solid composition according to any one of the preceding claims, comprising a step of dehydrating an aqueous composition comprising said particulate metal, said titanate and/or zirconate precursor, said silane, optionally said silicate, and water, as defined in any one of claims 9 to 12.

14. The process according to the preceding claim, **characterized in that** dehydration is conducted by freeze-drying, zeodration or vacuum evaporation, or atomization.

15. A process for preparing an aqueous composition comprising at least one particulate metal, a binder based on silane and titanate and/or zirconate, comprising a step of hydrating a solid composition according to any one of claims 1 to 12 or obtained by the process according to any one of claims 13 and 14.
